# EUROPEAN PATENT APPLICATION

(11) **EP 1 797 782 A1**
(43) Date of publication of application: **20.06.2007**
(21) Application number: 05801428.3
(22) Date of filing: 05.10.2005
(51) Int. Cl.: A42B 3/00

(54) **AIRBAG MODULE FOR PROTECTION OF THE CERVICODORSAL REGION**

(30) Priority: 05.10.2004 ES 200402362
(71) Applicant: APC Systems BCN, S.L., 08339 Vilassar de Dalt (ES)
(72) Inventor: MILLET LÓPEZ, Alejo, E-08339 Vilassar de Dalt (ES)
(74) Representative: Barroso Sánchez-Lafuente, Ignacio M.
(86) International application number: PCT/ES2005/000533
(87) International publication number: WO 2006/040378

(57) **Abstract**

Intended to be used by users whose activity requires cervical and dorsal protection, it comprises an expandable gas stored in a bottle or tank (13); at least one diffuser for the gas (14); a pyrotechnic activation system (16) to bring about the expansion of the gas; at least one control signal receiver (12, 12') for activation of the system; an airbag (11) adapted to be inflated by the expansion of the gas when a control signal is received; a receptacle (10) for the support and housing of the different elements and a removable and multi-positionable fixing means to the headrest (2) of an automobile or to a helmet (1).

Once inflated, the bag (11') has an essentially parallelipipedic shape (19), (20), spanning from the base of the skull to half-way down the back, with lateral wings (21) which enshrine the neck.

## Description

### Technical field of the invention

The invention relates to an independent airbag module for cervical and dorsal protection, which is comprised of an airbag located in a device which is independent from the protective element or helmet.

The application of this invention is within the industry devoted to the manufacture of airbags, these airbags being multi-purpose and multi-positionable, the airbag module finding its application in all transport devices which may be used by users whose activity requires cervical and dorsal protection.

### Background of the invention

Injuries of the cervical column are of great importance due to their severity and to the neurological implications which these entail. These neurological injuries provoke serious limitations and disability in the lives of persons who are at the height of their working lives. The cost of treatment for persons, organizations and countries is extraordinarily high.

Currently, certain protection devices by means of airbags are known in the state of the art.

After a search in a technological patent report, it has been established that those which are closest to the profile of this invention are:

The Utility Model U200202635 ("*Protective helmet with airbag*"), which is the property of this inventor, Dr. Aleix Millet López; said utility model relates to a protective helmet which incorporates an airbag, whose purpose lies in the use of the helmet in question, in protecting the head of the user, and by means of the use of the airbag, obtaining protection means against frontal, lateral and dorsal traumatisms and at the same time, should the incorporated airbag fire, achieves greater protection of the user against possible anomalies in the spinal column.

The Italian priority patent of Europe no. EP0850575 ("*Pneumatic safety device for crash helmets*") claims a system to be added to existing helmets or those of new manufacture, characterised in that it incorporates a pneumatically expansible balloon which is fired by inertia sensors.

The German patent DE19604822 ("*Helmet with integrated airbag protection*") relates to the incorporation of several airbags in the interior of a helmet between the internal and external shells. The airbags are fired by a collision monitor located in the vehicle, connected to the helmet via cable, infra-red, radio or ultrasonics.

The American patent US6418564 ("*Two piece helmet with optional airbag*") consists of a helmet divided in two parts, in whose interior an airbag is located, which is fired by proximity sensors when, the motorcycle being in motion, the helmet moves away from the same more than a certain distance.

The German patent DE19631465 ("*Protective helmet, e.g. for motorcyclist*") consists of an airbag element which is a separate unit from the helmet but affixed to the same, which incorporates acceleration and braking and also contact sensors, located in the helmet itself.

The German patent DE4416847 ("*Safety helmet with airbag for motorcycle riders*") incorporates a safety diagnosis unit on the motorcycle, with accelerometric sensors, linked to the helmet via a cable.

From the findings of the International Patent Search Report (IPSR), it is considered relevant to cite the German patent DE19516015 ("*Safety helmet with annular air bag around wearer's neck*") which relates to a helmet with a gas cushion divided into several symmetric compartments, which protects the neck area, in the shape of a ring located in the interior of the helmet.

As a whole, neither the patents cited nor the utility model relate to the shape of the airbag either before or after firing. This factor is of vital importance given that cervical spinal cord injury is more frequent than dorsal or lumbar injuries, due to the fact that it is the most mobile part of the spinal column and that it supports the weight of the head and the helmet.

Neither do said patents incorporate the action means of the detection and pyrotechnic systems, the arrangement of the elements in the interior of the airbag, or the method of carrying out the fixing of the airbag to the helmet.

US5313670 and the aforesaid DE19604822 must be cited as the closest prior art documents, which, according to the preamble, describe a cervical and dorsal protection airbag module, of the type intended to be used by users whose activity requires cervical and dorsal protection, applicable to helmets, comprising expanding gas housed in a bottle or tank; at least one diffuser for the gas; a pyrotechnic activation system to bring about the expansion of the gas; control signal receiving means for the activation of the system; and an airbag, adapted to be inflated by the expansion of the gas when the control signal is received.

While they allow for certain drawbacks to be overcome, both the system of US5313670 and DE19604822 are based on a "hollow collar", wherein the air bag is folded all around the neck of the user or base of the helmet, thus being forced to permanently occupy a certain space of the helmet. This hollow collar is in contact to the neck or shoulder of the user, and is mounted in origin within the helmet. In normal use conditions, this can result in an inconvenience. When it is inflated, , the airbag adopts a toroidal or surgical collar shape. Moreover, the helmet must compulsory have a so called "chin bar".

In US5313670, which can be deemed as being the Closest Prior Art, in addition to the hollow collar, a piercing mechanism with pull-pin is used for the activation, as well as a cable linked to the vehicle, whereby the system is activated when the wearer is suddenly moved apart from the vehicle. In this moment the gas is expanded inwards to the bag. Nevertheless, this systems have an additional drawback in that the sudden movement can not be representative or consequence of a crash or an accident, and the air bag can unsuitably be inflated in unnecessary cases (e.g. by mistake).

Nothing is suggested in the aforesaid documents about the way in which the gas is driven from the diffuser to the bag for the inflation of the latter. Thus, is it not clear whether the resultant force of the inflation is harmful or not for the user or wearer.

It is thought that the aforesaid problems and drawbacks may have undermined the use of these kind of airbags.

The object of this invention is to provide a solution to the aforementioned drawbacks and problems of the current State of the Art.

### Explanation of the invention

To this end, the object of this invention is an innovative cervical and dorsal protection airbag module, of the type described in the pre-characterising portion of claim 1, of an innovative concept and functionality regarding its modularity, which in essence is characterised, according to the characterising portion of claim 1, in that it also comprises a shell for the support and housing of the various elements, provided removable and multi-positionable attachment means to the headrest of an automobile or to a helmet, the airbag module being adapted to be removably fixed on a pre-existing headrest or helmet.

In accordance with claim 2, the airbag, once inflated, adopts an essentially parallelipipedic shape, spanning from the base of the skull to half-way down the back, with lateral wings which enshrine the neck.

In claims 3 and on, further features and embodiments of the invention are described.

The centripetal diffuser features a plurality of radially disposed holes, around a common circumference, distributed in diametrically opposed pairs of holes.

In accordance with a preferred embodiment, the joining means is comprised of an adaptable plate fixed to the lower rear area of the helmet.

In accordance with another characteristic of this invention, the cervical and dorsal protection airbag module comprises a radio frequency receiving device, a microcontroller, a solenoid, piezoelectric devices, a LED indicator and an inflation mechanism.

The base plate incorporated in the vehicle or in the appropriate zone may incorporate a microprocessor, a radio frequency transmitter, an encoding circuit, a plurality of accelerometers, a plurality of tiltmeters, a battery, a power supply outlet and an earth outlet, likewise a joining means to the carrying vehicle.

The module of this invention may be provided with differentiated power supplies, for example batteries of any type, or a connection to the network in the event of being fitted to a vehicle equipped with generators.

The communication between the airbag module attached to the helmet or to the headrest, and the module attached to the vehicle may be carried out by means of a physical connection such as a cord, a cable, etc.

Alternatively, the communication between the airbag module attached to the helmet or to the headrest, and the module attached to the vehicle may be carried out by any type of electromagnetic waves.

The cervical and dorsal protection airbag module is comprised of a containing body, which may be positioned on the headrest of a conventional vehicle or on the helmet of a motorcyclist, a horseman or a skier, etc., forming the airbag containing module, which may or may not be integrated on the helmet or any other part of the equipment of the user, and which is intended to protect the cervical area of the person who carries the same.

The airbag, after inflation of the same, adopts a parallelipipedic shape, spanning from the base of the skull to half-way down the back, and with lateral wings. It is inflated by a centripetal diffusing device which contains a plurality of holes arranged in such a way as to minimise the inflation time.

Its internal architecture, integrated within a protective body, manufactured from various materials, such as plastic, glass fibre, etc., features in its interior all the necessary means for the operation of an airbag.

The body of the cervical and dorsal protection airbag module may be used in any type of protection or safety element for a vehicle or means of transport in general, allowing its application in the practice of sports which require cervical safety elements, or any other type of occupational or leisure activity which may require cervical protection.
The invention may be equipped with auxiliary batteries formed by cadmium cells, other batteries or the power supply elements which may be deemed suitable, in order to generate the cervical protection use of the same, as may be required.

### Brief description of the drawings

Portrayed in the attached drawings, as a non-limitative example, is an embodiment of the cervical and dorsal protection airbag module which is the object of this invention. In said drawings:
- FIGURE 1: portrays a side elevational view of the object of this invention, corresponding to a cervical and dorsal protection airbag module;
- FIGURE 2: portrays a view from the rear of the object portrayed in FIGURE 1;

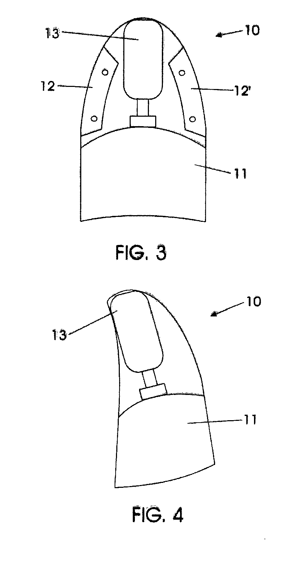

- FIGURE 3: portrays a view of the airbag assembly incorporated in the helmet;
- FIGURE 4: portrays a side elevational view of the object portrayed from the rear in FIGURE 3;
- FIGURE 5: portrays the devices which integrate the cervical and dorsal airbag module;

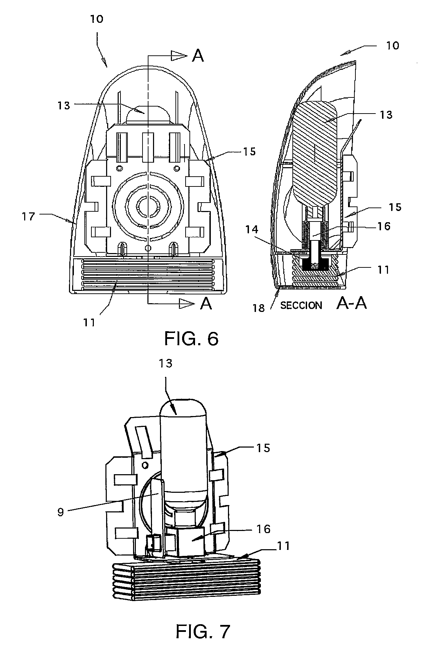

- FIGURE 6: portrays a detailed cross-section of the interior of the cervical and dorsal protection airbag module;
- FIGURE 7: portrays the assembly of the devices without the protective casing;
- FIGURE 8: is a side elevational view of the airbag when unfurled;
- FIGURE 9: is a rear view of the unfurled airbag which is the object of the portrayal in FIGURE 8;
- FIGURE 10: portrays a headrest with the cervical and dorsal protection airbag module attached; and
- FIGURE 11: portrays another perspective of a headrest with the cervical and dorsal protection airbag module attached;

### Description of preferred embodiments

In accordance with these figures, it may be observed that the cervical and dorsal protection airbag module 10 is constituted following fixing on the area which is considered to be suitable, portrayed in the figures as a helmet 1 or a headrest 2, or any other element of an automobile or of any other point where its use may be required.

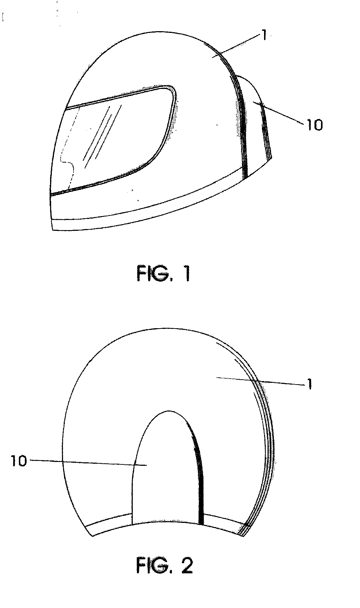

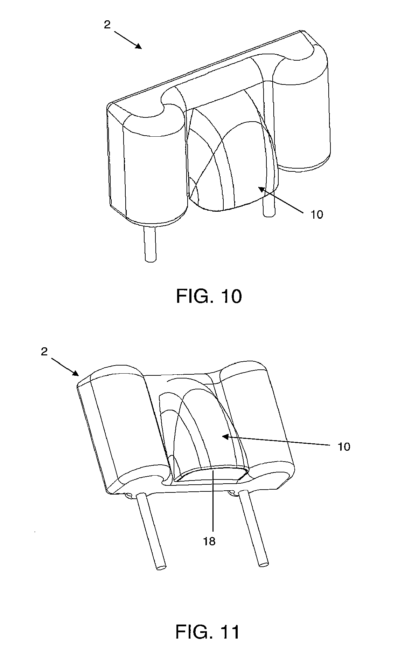

In the attached drawings, a helmet 1 is portrayed (in particular in Figures 1, 2, 8 and 9), also a headrest 2 (in particular in figures 10 and 11), upon which is affixed the airbag module 10, manufactured from plastic, glass fibre or similar material, within which the actuation means of the same are inserted, said actuation means being the furled bag 11, the sensors 12 and 12', the gas bottle 13, the pyrotechnic firing mechanism 16 which features the gas outlet and the power supply batteries.

All the elements are linked within the airbag assembly or module 10, suitably connected, and protected by a shell or housing 17, the geometry of whose lower section 18 permits the partial breakage and the unfurling of the bag 11. The elements are separated from each other by means of a vertical partition 7 and a separating wall 8.

The joining means 15 to the helmet are multi-purpose and multi-positionable and therefore permit the same to be attached to the rear of the helmet 1 or to any type of helmet.

In the preferred embodiment, said joining means 15 consist of an adaptable plate fixed to the lower-rear zone of the helmet 1. Alternatively, the join may be carried out by means of adhesives or by other joining means as an alternative to those portrayed.

In the particular case of its use in a headrest 2, the joining means include anchoring means to the headrest 2.

After inflation, the bag 11' features a shape which is essentially parallelipipedic 19 and 20, spanning from the base of the skull to half-way down the back, with lateral wings 21 which enshrine the neck.

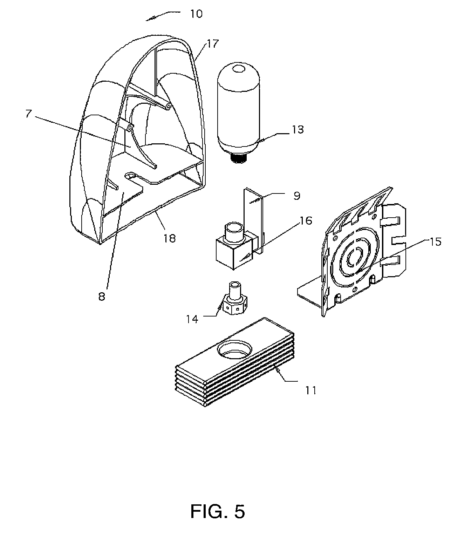

The furled bag 11 is inflated by a centripetal diffusing device 14 which features a plurality of holes (Figure 5) arranged radially in such a way that the egress of air cancels the reactions of the horizontal forces which might be damaging to the cervical zone of the user, and to prevent the apparition of a horizontal reaction which might damage the same. To this end, the holes are arranged radially, around a common circumference, distributed as pairs of diametrically opposed holes.

The centripetal diffuser 14 is attached to the airbag module 10 by means of a supporting plate 9.

It is important to bear in mind that of the cervical traumatisms which do not present neurological damage at the precise moment of the accident, 10% present said damage at a subsequent moment; for this reason, all cervical traumatisms should be considered as being possible cervical spinal cord injuries, until their evolution proves definitively that there is no medullary damage.

Traumatisms of the cervical spinal column may be divided as being 20% for c-1 - c-2 and 80% for c-3 - c-7; the most frequently affected vertebrae being c-5 and c-6. Injuries to c-1, c-2 and c-3 may endanger the life of the patient and cause total quadriplegia; for this reason they are of the utmost severity.

Cervical spinal injury is so serious that it presents between 7% and 15% general mortality, and between 35% and 50% mortality in complete cervical injuries, according to different publications.

For these reasons, the object of the shape of the inflated airbag 11' of this invention is to prevent frontal, lateral and dorsal traumatisms, completely protecting the spinal column from the highest point of the same to half-way down. The invention is designed in order that the airbag may emerge to the exterior with a downward vertical movement, as well as acting as a lateral protection for the spinal column in the region of the first and second cervical vertebrae.

The optimal method of inflating the bag, in accordance with medical-physiological considerations, is first to inflate the upper part 19 of the bag 11 11' and subsequently progressively inflating the lower part 20 and the lateral wings 21.

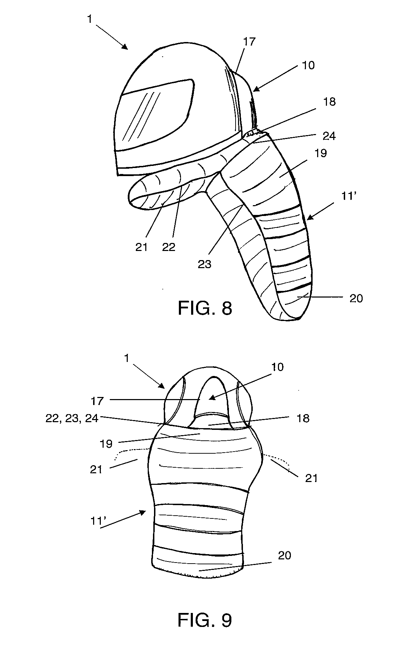

All this gives rise to a particular design of the bag 11, with zones of greater width and/or thickness than others, a suitable ribs 22, 23, 24 (see FIGS. 8 & 9), for example of the plastic material of which it is made, and differential conduction means for the air, which have no impact here.

The cervical and dorsal protection airbag module features a motherboard formed by a radio frequency receiver and a battery-fed microcontroller, a solenoid, a mini-battery, piezoelectric devices, a LED indicator and the joining means 15 to the helmet, while on the vehicle or means of carrying the user a motherboard is attached which, as is the case of the motherboard attached to the helmet, incorporates a microprocessor, a radio frequency transmitter, an encoding circuit, one or several accelerometers, one or several tiltmeters, a battery, a power supply outlet and an earth outlet and the joining means to the vehicle carrying the user of the helmet.

The invention may comprise all the aforementioned components or part of the same, or may be replaced by other elements which may be considered necessary.

It should also be noted that the communication between the element to be attached to the helmet and the element attached to the vehicle is realized by means of a physical element such as a cord, a cable, or by means of radio waves or any other type of electromagnetic waves.

In this last case, the receivers 12, 12' of the airbag are cordlessly connected to a generator and transmitter of a control signal, indicating a collision or accident, detected by an accident sensor located in the body or framework of the motorcycle, bicycle or other vehicle used by the user. Alternatively, or additionally, the accident sensor and the signal generator and transmitter may be located on the helmet 1 itself.

The helmet 1 which bears this invention may be anchored, physically connected, to the vehicle bearing the transmitter element; likewise, the receiver containing the airbag may be attached to the surface of the helmet or protective element, or alternatively integrated under the external surface of the helmet or protective element, thus being camouflaged and hidden from view.

When the airbag which is the object of this invention is installed in the headrest 2 of an automobile, as portrayed in Figures 10 and 11, the airbag may be installed in an intermediate position of the headrest, in such a way that the lower part 18, easily broken, is in an optimal position in the proximity of the cervical zone of the user. In this case, it is preferable to have available means which oblige this optimal position.

The nature of this invention having been sufficiently described herein, likewise the manner of putting the same into practice, let it be known that anything which does not alter, change or modify its basic principle is subject to variations of detail.

## Claims

1. A cervical and dorsal protection airbag module, of the type intended to be used by users whose activity requires cervical and dorsal protection, comprising:
- expanding gas housed in a bottle or tank (13);
- at least one diffuser for the gas (14);
- a pyrotechnic activation system (16) to bring about the expansion of the gas;
- control signal receiving means (12, 12') for the activation of the system;
- an airbag (11), adapted to be inflated by the expansion of the gas when a control signal is received;
**characterised in that** it also comprises a shell (10) for the support and housing of the various elements, provided removable and multi-positionable attachment means to the headrest (2) of an automobile or to a helmet (1), the airbag module being adapted to be removably fixed on a pre-existing headrest or helmet.

2. A cervical and dorsal protection airbag module, as claimed in claim 1, **characterised in that**, once inflated, the bag (11') has an essentially parallelipipedic shape (19), (20), spanning from the base of the skull to half-way down the back, with lateral wings (21) which enshrine the neck.

3. A cervical and dorsal protection airbag module, as claimed in claim 2, **characterised in that**, once inflated, the airbag (11') has zones of different width and thickness, suitable ribs (22, 23, 24), and means for differential drive of the air.

4. A cervical and dorsal protection airbag module, according to one of claims 1 and 3, **characterised in that** the lower part (18) of the airbag module (10) is easily breakable on inflation of the bag (11).

5. A cervical and dorsal protection airbag module, as claimed in claim 1, **characterised in that** the centripetal diffuser (14) features a plurality of holes, arranged radially around a common circumference, distributed in diametrically opposed pairs of holes, so as the outgoing air cancels the horizontal forces' reactions harmful for the cervical zone of the user.

6. A cervical and dorsal protection airbag module, as claimed in claim 1, **characterised in that** said attachment means comprise an plate (15) adapted in its shape to be fixed to the lower rear area of the helmet.

7. A cervical and dorsal protection airbag module, as claimed in claim 6, **characterised in that** said attachment means comprise a housing (17), provided with a separating wall (8), for separating the housing of the folded bag (11) and the housing for the pyrotechnic activation system, and a lower wall (18), adapted to undergo a partial breakage and the unfurling of the bag.

8. A cervical and dorsal protection airbag module, as claimed in claim 1, **characterised in that** it comprises a radio frequency receiver, a micro-controller, a solenoid, piezoelectric devices, a LED indicator and an inflation mechanism (9) (16) and (14).

9. A cervical and dorsal protection airbag module, as claimed in claim 1, **characterised in that** the said control signal receiving means (12, 12') comprise at least one accelerometer and at least one tiltmeter.

10. A cervical and dorsal protection airbag module, as claimed in claim 9, **characterised in that** the motherboard incorporated in the vehicle or suitable zone, incorporates a microprocessor, a radio frequency transmitter, an encoding circuit, a plurality of accelerometers, a plurality of tiltmeters, a battery, a power supply outlet and an earth outlet and the joining means to the carrying vehicle.

11. A cervical and dorsal protection airbag module, as claimed in preceding claims, **characterised in that** it has differentiated supply means, such as batteries of any type, or a connection to the network in the event of being fitted to a vehicle equipped with generators.

12. A cervical and dorsal protection airbag module, as claimed in preceding claims, **characterised in that** the communication between the airbag module (10) attached to the helmet (1) or headrest (2), and the module attached to the vehicle is carried out by means of a physical connection such as a cord, a cable, etc.

13. A cervical and dorsal protection airbag module, as claimed in preceding claims, **characterised in that** the communication between the airbag module (10) attached to the helmet (1) or headrest (2), and the module attached to the vehicle is carried out by means of any type of electromagnetic waves.
